# EUROPEAN PATENT APPLICATION

(11) **EP 1 388 684 A1**
(43) Date of publication of application: **11.02.2004**
(21) Application number: 03254897.6
(22) Date of filing: 06.08.2003
(51) Int. Cl.: F16D 69/02

(54) **Non-asbestos friction material**

(30) Priority: 07.08.2002 JP 2002229687
(71) Applicant: NISSHINBO INDUSTRIES, INC., Chuo-ku, Tokyo (JP)
(72) Inventor: Takeuchi, Kazuhiro c/o Tatebayashi Plant, Oura-gun Gunma-ken (JP); Nagata, Takeo c/o Tatebayashi Plant, Oura-gun Gunma-ken (JP)
(74) Representative: Stuart, Ian Alexander

(57) **Abstract**

A non-asbestos friction material is made of a molded and cured composition containing a fibrous base other than asbestos, a binder, a filler and an abrasive. The abrasive includes zirconium silicate beads. Friction materials thus constituted have suitable coefficients of friction, exhibit a good noise performance, and minimize mating surface attack.

## Description

The present invention relates to non-asbestos friction materials. Preferred embodiments may be highly suitable for use in such applications as brake pads, brake linings and clutch facings for automobiles and various kinds of industrial machinery.

Ceramics such as zirconium silicate are used as abrasives in automotive friction materials, and especially disk pads, to ensure a good coefficient of friction and other desirable performance characteristics.

The particles of zirconium silicate generally used for this purpose are produced from zircon sand as the starting material by milling, deironing and classification. Because the zirconium silicate particles thus produced are angular and of irregular shape, when included in a friction material, they help confer on the material a high coefficient of friction but have a tendency to cause noise and mating surface attack.

It would therefore be advantageous to provide non-asbestos friction materials which have good coefficient of friction characteristics, yet minimize noise and mating surface attack.

We have discovered that when zirconium silicate is included as at least part of the abrasive in a non-asbestos friction material, using the zirconium silicate in the form of beads ensures that the material has a sufficient coefficient of friction and also provides the material with a good noise performance and minimal mating surface attack.

Accordingly, the invention provides a non-asbestos friction material made by molding and curing a composition which includes a fibrous base other than asbestos, a binder, a filler and an abrasive, which abrasive includes zirconium silicate beads.

### DETAILED DESCRIPTION OF THE INVENTION

As noted above, the non-asbestos friction material of the invention is made by molding and curing a composition composed primarily of a fibrous base, a binder, a filler and an abrasive.

The fibrous base may be any non-asbestos inorganic fiber or organic fiber ordinarily used in friction materials. Illustrative examples of suitable fibrous bases include inorganic fibers such as metal fibers (e.g., iron, copper, brass, bronze and aluminum), ceramic fibers, potassium titanate fibers, glass fibers, rock wool, wollastonite, sepiolite, attapulgite and synthetic mineral fibers; and organic fibers such as carbon fibers, aramid fibers, aramid pulp, polyimide fibers, polyamide fibers, phenolic fibers, cellulose and acrylic fibers. These fibrous bases may be used alone or as combinations of two or more thereof.

The fibrous base may be used in the form of short fibers or a powder, and is included in an amount of generally at least 5 vol% and preferably at least 15 vol%, but generally not more than 70 wt% and preferably not more than 30 vol%, based on the overall friction material composition.

The binder is preferably a thermoset resin binder, but may be any known binder commonly used in friction materials. Illustrative examples of suitable binders include phenolic resins; various rubber-modified phenolic resins such as high-ortho phenolic resins modified with acrylonitrile-butadiene rubber (NBR), NBR-modified phenolic resins, acrylic rubber-modified phenolic resins and aromatic-modified phenolic resins; and also melamine resins, epoxy resins, NBR, nitrile rubber and acrylic rubber. Any one or combinations of two or more of these may be used.

The binder is included in an amount of generally at least 10 vol%, and preferably at least 15 vol%, but generally not more than 30 vol%, and preferably not more than 25 vol%, based on the overall friction material composition.

The filler may be composed of an organic filler and an inorganic filler. Suitable organic fillers include cashew dust, ground tire rubber, rubber dust (rubber powder and granules), nitrile rubber dust (vulcanized product) and acrylic rubber dust (vulcanized product). These organic fillers may be used alone or as combinations of two or more thereof. The amount of such organic fillers is generally at least 5 vol%, and preferably at least 10 vol%, but generally not more than 50 vol%, and preferably not more than 25 vol%, based on the overall friction material composition.

Suitable inorganic fillers include slaked lime, barium sulfate, calcium carbonate, mica, vermiculite, coke, graphite and molybdenum disulfide, as well as metal powders such as iron, copper and aluminum. The amount of such inorganic fillers is generally at least 5 vol%, and preferably at least 10 vol%, but generally not more than 70 vol%, and preferably not more than 30 vol%.

The present invention is characterized in particular by the incorporation of zirconium silicate beads as the abrasive in the non-asbestos friction material-forming composition. These zirconium silicate beads have an average particle size of generally at least 15 µm, preferably at least 30 µm, and most preferably at least 50 µm, but generally not more than 500 µm, preferably not more than 300 µm, and most preferably not more than 150 µm. Too large an average particle size may result in noise generation and aggravate mating surface attack by the non-asbestos friction material. On the other hand, zirconium silicate beads having too small an average particle size may fail to confer the friction material with an abrasive effect, preventing the friction material from achieving a suitable coefficient of friction.

The zirconium silicate beads are included in an amount of generally at least 0.5 vol%, preferably at least 3 vol%, and most preferably at least 5 vol%, but generally not more than 25 vol%, preferably not more than 15 vol%, and most preferably not more than 8 vol%, based on the overall friction material composition. Too high a zirconium silicate bead content may result in noise generation and aggravate mating surface attack by the non-asbestos friction material, whereas too low a content may fail to confer the friction material with an abrasive effect, preventing the friction material from achieving a suitable coefficient of friction.

The friction material of the invention is generally produced by uniformly blending the above components in a suitable mixer such as a Henschel mixer, Loedige mixer or Eirich mixer, and preforming the blend in a mold. The preform is then molded at a temperature of 130 to 200°C and a pressure of 100 to 1,000 kg/cm² for a period of 2 to 15 minutes.

The resulting molded article is typically postcured by heat treatment at 140 to 250°C for 2 to 48 hours, then spray-painted, baked and surface-ground as needed to give the finished article.

In the case of automotive disk pads, production may be carried out by placing the preform on an iron or aluminum plate that has been pre-washed, surface-treated and coated with an adhesive, molding the preform in this state within a mold, and subsequently heat-treating, spray-painting, baking and surface-grinding.

The non-asbestos friction material of the invention can be used in a broad range of applications, including brake linings, clutch facings, disk pads, paper clutch facings and brake shoes in automobiles, large trucks, railroad cars and various types of industrial machinery.

Preferably substantially all zirconium silicate is in the form of beads. Other abrasives may or may not be present.

### EXAMPLES

Examples of the invention and comparative examples are given below by way of illustration and not by way of limitation.

### Examples 1 to 11, Comparative Examples 1 to 7

Friction material compositions formulated as shown in Table 1 were uniformly blended in a Loedige mixer and preformed in a pressure mold under a pressure of 100 kg/cm² for a period of 1 to 3 minutes. The preforms were molded for 2 to 10 minutes at a molding temperature and pressure of 160°C and 250 kg/cm², then postcured by 5 hours of heat treatment at 200°C, yielding automotive brake pads in the respective examples.

The brake pads obtained in the examples were subjected to wear tests under the following conditions, and to performance evaluations using the methods indicated below.

### Friction Test Conditions

a. Friction tests were carried out in accordance with JASO C406 ("Dynamometer Test of Brake System in Automobiles"). The speed at the start of braking was 50 km/h, the braking deceleration was 0.3G, and the number of braking cycles was 2,000. Friction tests were conducted at different temperatures.
b. Friction tests were carried out in accordance with JASO C404 ("Road Vehicle Test of Service Braking System in Automobiles").

### Performance Evaluation Methods

(1) Coefficient of Friction Measured in accordance with JASO C406.
(2) Mating Surface Attack Measured in accordance with JASO C406. An amount of wear on the mating surface (rotor) of less than 10 µm was regarded as excellent, from 10 to 20 µm of wear was good, and more than 20 µm was poor.
(3) Noise Performance Measured in accordance with JASO C404. The volume and frequency of noise generated in a road vehicle test were rated according to the following criteria.
   Excellent (Exc): No noise
   Good: Almost no noise
   Poor: Substantial noise

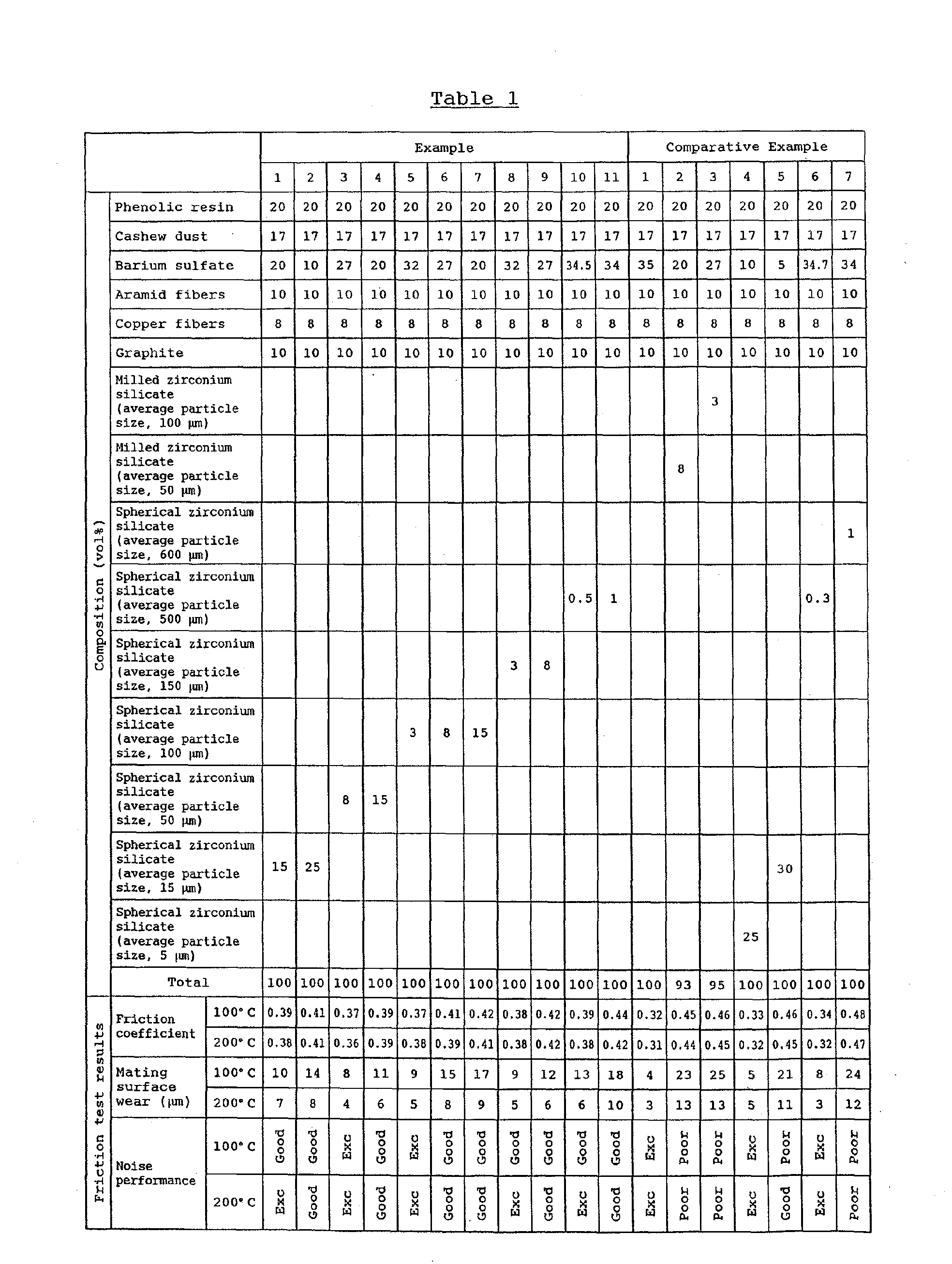

As is apparent from the foregoing results, the exemplary embodiments of the invention have suitable coefficients of friction, and exhibit a good noise performance, and minimize mating surface attack.

## Claims

1. A non-asbestos friction material made by molding and curing a composition comprising a fibrous base other than asbestos, a binder, a filler and an abrasive; wherein the abrasive includes zirconium silicate beads.

2. The non-asbestos friction material of claim 1, wherein the zirconium silicate beads have an average particle size of 15 to 500 µm.

3. The non-asbestos friction material of claim 1 or 2, having a zirconium silicate bead content of 0.5 to 25 vol%, based on the overall composition.
